# EUROPEAN PATENT APPLICATION

(11) **EP 2 574 479 A1**
(43) Date of publication of application: **03.04.2013**
(21) Application number: 11194490.6
(22) Date of filing: 20.12.2011
(51) Int. Cl.: B60C 23/04

(54) **TPMS transmitting module**

(30) Priority: 30.09.2011 KR 20110100140
(71) Applicant: Samsung Electro-Mechanics Co., Ltd, Gyeonggi-do 443-743 (KR)
(72) Inventor: Han, Jong Woo, 137-796 Seoul (KR); Song, Jong Hyeong, 443-706 Gyunggi-do (KR)
(74) Representative: Heine, Christian Klaus

(57) **Abstract**

Disclosed herein is a tire pressure monitoring system (TPMS) transmitting module including: a case mounted in a tire; a transmitting unit mounted in the case; and a coating layer coated on an outer side of the transmitting unit.

## Description

### CROSS REFERENCE TO RELATED APPLICATION

This application claims the benefit of Korean Patent Application No. 10-2011-0100140, filed on September 30, 2011, entitled "TPMS Transmitter", which is hereby incorporated by reference in its entirety into this application.

### BACKGROUND OF THE INVENTION

### 1. Technical Field

The present invention relates to a tire pressure monitoring system (TPMS) transmitting module.

### 2. Description of the Related Art

When tire pressure of a vehicle is less than appropriate pressure, fuel efficiency is reduced and a problem occurs in terms of safety of a driver due to abrasion of a tire. Therefore, a tire pressure monitoring system (TPMS) has been used in order to inform the driver of pressure reduction of the tire.

A transmitter of this tire pressure monitoring system (TPMS) includes a pressure sensor, a circuit unit, and an antenna, and is mounted in an inner portion of the tire to thereby serve to provide information (temperature and pressure) on the inner portion of the tire to a receiver.

Here, the TPMS should be protected from heat, impact, and introduction of various foreign materials (cleaning liquid, engine oil, rainwater, or the like) causing corrosion.

Owing to the above-mentioned reason, a filler is injected into the entire inner portion of the transmitter to thereby protect a sensor, a circuit, and the like.

This filler plays an important role in securing reliability for the transmitter of the TPMS. However, weight of the transmitter of the TPMS increases because of an increase in weight due to the filler. In addition, the transmitter is damaged due to heat generated during a filling process at the time of filling of the filler in the transmitter. Particularly, the weight of the transmitter of the TPMS is an important issue causing an increase in an installation cost of the TPMS.

Here, the transmitter of the TPMS is coupled to a tire valve and is mounted on a wheel to thereby be applied with strong centrifugal force.

Particularly, in a vehicle in which the TPMS is mounted, a tire valve coupled to the TPMS is applied with stronger centrifugal force due to the weight of the sensor module. Therefore, a clamp in valve made of a metal material and coupled to a wheel is used, such that a mounting cost of the transmitter of the TPMS increases.

### SUMMARY OF THE INVENTION

The present invention has been made in an effort to provide a tire pressure monitoring system (TPMS) transmitting module in which a TPMS transmitting unit is protected from heat, impact, and corrosion due to introduction of foreign materials.

The present invention also has been made in an effort to provide a TPMS transmitting module in which weight of a TPMS transmitting unit is reduced.

According to a preferred embodiment of the present invention, there is provided a tire pressure monitoring system (TPMS) transmitting module including: a case mounted in a tire; a transmitting unit mounted in the case; and a coating layer coated on an outer side of the transmitting unit.

The coating layer may be made of plastic.

The plastic may be parylene.

The parylene may be parylene C.

The transmitting unit may include a circuit unit.

The transmitting unit may further include a pressure sensor.

The pressure sensor may include a measuring groove formed in one side portion thereof, and the coating layer may further include a measuring groove coating film coated along an inner side of the measuring groove.

The coating layer may be formed in a thin film shape.

### BRIEF DESCRIPTION OF THE DRAWINGS

FIG. 1 is a use state view showing a TPMS transmitting module according to a preferred embodiment of the present invention;
FIG. 2 is a perspective view showing a state in which the TPMS transmitting module according to the preferred embodiment of the present invention is coupled to a tire valve; and
FIG. 3 is a cross-sectional view taken along line A-A' of FIG. 2.

### DESCRIPTION OF THE PREFERRED EMBODIMENTS

Various objects, advantages and features of the invention will become apparent from the following description of embodiments with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

The above and other objects, features and advantages of the present invention will be more clearly understood from the following detailed description taken in conjunction with the accompanying drawings. In the specification, in adding reference numerals to components throughout the drawings, it is to be noted that like reference numerals designate like components even though components are shown in different drawings. In addition, the present invention may be modified in various different ways and is not limited to the embodiments provided in the present description. Further, in describing the present invention, a detailed description of related known functions or configurations will be omitted so as not to obscure the subject of the present invention.

Hereinafter, preferred embodiments of the present invention will be described in detail with reference to the accompanying drawings.

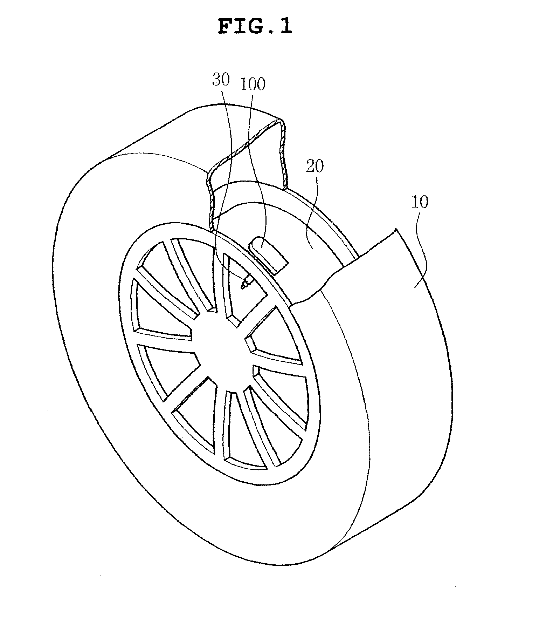

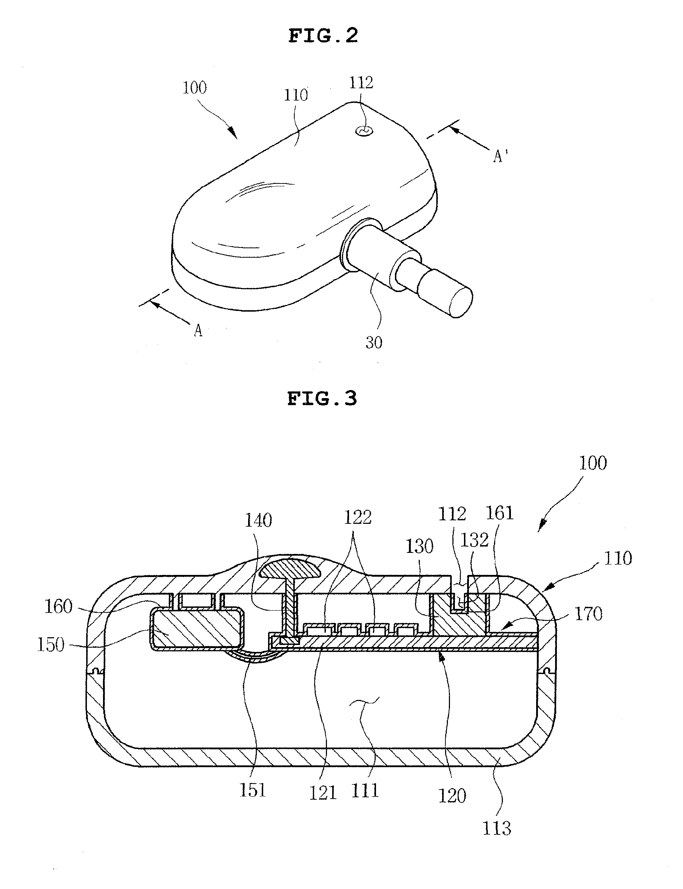

FIG. 1 is a use state view showing a TPMS transmitting module according to a preferred embodiment of the present invention; FIG. 2 is a perspective view showing a state in which the TPMS transmitting module according to the preferred embodiment of the present invention is coupled to a tire valve; and FIG. 3 is a cross-sectional view taken along line A-A' of FIG. 2. Here, a state in which the TPMS transmitting module 100 is coupled to a tire wheel 20 of a vehicle is shown in FIG. 1.

Referring to FIGS. 1 to 3, the TPMS transmitting module 100 according to the preferred embodiment of the present invention includes a case 110, a transmitting unit 170 mounted in the case 110, and a coating layer 160 coated on an outer side of the transmitting unit 170.

First referring FIGS. 1 and 3, the case 110 is mounted in an inner portion of a tire 10 and includes a receiving part 111 formed in an inner side thereof, wherein the receiving part 111 receives the transmitting unit 170 therein.

In addition, the case 110 is mounted on, for example, a tire valve 30 installed on a tire wheel 20. Here, the tire valve 30 penetrates through inner and outer portions of the tire 10, and the case 110 is coupled to the tire valve 30 portion positioned at an inner side of the tire 10. However, the mounting portion of the case 110 according to the preferred embodiment of the present invention is not limited thereto. Here, the case 110 may be coupled to the tire valve 30 through bolting.

Meanwhile, the case 110 may further include a cover 113 detachably coupled to a lower side portion thereof However, a structure of the case 110 according to the preferred embodiment of the present invention is not limited thereto. For example, a lower end portion of the case 110 may be closed by a blocking material without the cover 113.

Referring to FIGS. 1 and 3, the transmitting unit 170 is mounted in the inner portion of the case 110 and includes a circuit unit 120. In addition, the transmitting unit 170 may further include a pressure sensor 130, an antenna 140, and a battery 150. Here, the pressure sensor 130 and the antenna 140 are installed in the circuit unit 120.

Here, the circuit unit 120 includes a circuit board 121 and circuit components 122 installed on the circuit board 121.

In addition, the battery 150 is electrically connected to the circuit unit 120 by a connection line 151 to thereby supply electricity to the circuit unit 120.

In addition, a rear end of the pressure sensor 130 is mounted on the circuit board 121, and a measuring groove 132 formed in a front end of the pressure sensor 130 forms a path connected to a through-hole 112 formed in the case 110 and penetrating through inner and outer portions of the case 110. Here, the pressure sensor 130 may measure pressure of the inner portion of the tire by measuring pressure in the vicinity of the measuring groove 132 forming the path connected to the outer side of the case 110 through the through-hole 112.

In addition, the antenna 140 has a rear end mounted on the circuit board 121 and a front end positioned on a sidewall of the case 110 to thereby send out a measured valve received through the circuit unit 120 to a receiving part of the TPMS.

Further, the transmitting unit 170 measures air pressure of the inner portion of the tire 10 by the pressure sensor 130 and sends out the measured pressure value to the receiving part of the TPMS through the circuit board 121 and the antenna 140. Here, the receiving part of the TPMS is formed of, for example, a TPMS control device having a radio frequency (RF) receiver embedded therein to thereby confirm whether pressure of each tire 10 is within a system limitation and transmit corresponding information to an instrument cluster of the vehicle.

Referring to FIG. 3, the coating layer 160 is coated on the outer side of the transmitting unit 170 to thereby protect the transmitting unit 170 from heat, impact, and corrosion.

In addition, the coating layer 160 is formed along outer circumferences of the circuit unit 120, the pressure sensor 130, the antenna 140, and the battery 150 of the transmitting unit 170. In addition, the coating layer 170 formed on the outer side of the antenna 140 may be formed on a side portion of the antenna 140.

Here, the coating layer 160 is made of parylene, which is a plastic material having excellent chemical resistance. Therefore, even though the coating layer 160 is formed at a thin thickness, it may protect the transmitting unit 170. Accordingly, the coating layer 160 is formed in a shape in which a thin film having a thickness of 100 µm or less covers a circumference of the transmitting unit 170. Here, the coating layer 160 may be formed in a thin film shape in which a thickness of a film covering the transmitting unit 170 is 10 µm or less.

Particularly, the coating layer 160 is made of a parylene material to thereby coat the transmitting unit 170 at a thin thickness. As a result, weight of the TPMS transmitting module 100 is reduced, thereby making it possible to easily install the TPMS in the tire 10 and reduce an installation cost of the TPMS.

In addition, the parylene contains a parylene N, C, D, or F type. Here, all of the parylene N, C, D, and F types are distinguished from each other by a substituent in a carbon six-membered ring in which both sides are connected to a CH₂ group. The parylene N type does not contain a substituent, the parylene C type contains a single chloro, the parylene D type contains two chloros, and the parylene F type contains a single fluoro.

Particularly, the coating layer 160 according to the preferred embodiment of the present invention may be made of the parylene C type having a single chloro but is not limited to being made of the parylene C type. Here, the chloro may be a chlorine (Cl).

Here, the parylene C has significantly excellent chemical resistance, thereby making it possible to appropriately protect the transmitting unit 170 from heat, impact, and foreign materials.

In addition, when the outer side portion of the transmitting unit 170 is coated with the parylene, the inner side of the measuring groove 132 formed at one side portion of the pressure sensor 130 is also coated in a thin film shape to thereby form a measuring groove coating film 161. Therefore, the coating layer 160 is formed to include the measuring groove coating film 161, thereby making it possible to protect the sensor unit of the pressure sensor 130. As a result, since a protective member needs not to be formed on the inner side of the measuring groove 132 in order to protect an existing pressure sensor 130 and a process of forming the protective member may be omitted, a manufacturing cost of the TPMS transmitting module 100 and a time required to manufacture the TPMS transmitting module 100 may be reduced.

According to the preferred embodiment of the present invention, the TPMS transmitting unit is protected from heat, impact, and corrosion due to introduction of foreign materials, such that a fault of the TPMS transmitting unit is prevented, thereby making it possible to reduce a maintenance cost.

In addition, according to the preferred embodiment of the present invention, weight of the TPMS transmitting unit is reduced, thereby making it possible to reduce an installation cost of the TPMS transmitting module.

Although the embodiment of the present invention has been disclosed for illustrative purposes, it will be appreciated that a TPMS transmitting module according to the invention is not limited thereto, and those skilled in the art will appreciate that various modifications, additions and substitutions are possible, without departing from the scope and spirit of the invention.

In addition, any and all modifications, variations or equivalent arrangements should be considered to be within the scope of the invention, and the detailed scope of the invention will be disclosed by the accompanying claims.

## Claims

1. A tire pressure monitoring system (TPMS) transmitting module comprising:
a case mounted in a tire;
a transmitting unit mounted in the case; and
a coating layer coated on an outer side of the transmitting unit.

2. The TPMS transmitting module as set forth in claim 1, wherein the coating layer is made of plastic.

3. The TPMS transmitting module as set forth in claim 2, wherein the plastic is parylene.

4. The TPMS transmitting module as set forth in claim 3, wherein the parylene is parylene C.

5. The TPMS transmitting module as set forth in claim 1, wherein the transmitting unit includes a circuit unit.

6. The TPMS transmitting module as set forth in claim 5, wherein the transmitting unit further includes a pressure sensor.

7. The TPMS transmitting module as set forth in claim 6, wherein the pressure sensor includes a measuring groove formed in one side portion thereof, and
wherein the coating layer further includes a measuring groove coating film coated along an inner side of the measuring groove.

8. The TPMS transmitting module as set forth in claim 1, wherein the coating layer is formed in a thin film shape.
